# EUROPÄISCHE PATENTSCHRIFT

(11) **EP 4 069 394 B1**
(45) Veröffentlichungstag und Bekanntmachung des Hinweises auf die Patenterteilung: **29.11.2023**
(21) Anmeldenummer: 20758108.3
(22) Anmeldetag: 18.07.2020
(51) Int. Cl.: B01D 1/00, B01D 3/02, B01D 3/10, B01D 3/42, B01D 5/00, D06F 43/08

(54) **VERFAHREN UND ANLAGE ZUM DESTILLIEREN EINER FLÜSSIGKEIT**
METHOD AND INSTALLATION FOR DISTILLING A LIQUID
PROCÉDÉ ET INSTALLATION DE DISTILLATION D'UN LIQUIDE

(30) Priorität: 05.12.2019 DE 102019008444
(43) Veröffentlichungstag der Anmeldung: 12.10.2022
(73) Patentinhaber: Ch. Batsch Verfahrenstechnik GmbH, 53340 Meckenheim (DE)
(72) Erfinder: BATSCH, Christine, 53347 Alfter (DE)
(74) Vertreter: Koch, Theodor
(86) Internationale Anmeldenummer: PCT/DE2020/000161
(87) Internationale Veröffentlichungsnummer: WO 2021/110187

(56) Entgegenhaltungen:
- EP-A1- 2 606 949
- DE-A1- 2 934 440
- DE-U1- 29 504 345
- JP-U- S58 112 401
- US-A- 4 246 116
- US-A- 4 279 704
- US-A- 4 534 830
- US-A- 4 536 256

## Beschreibung

Die Erfindung betrifft ein Verfahren zum Destillieren einer Flüssigkeit aus einer Schmutzflüssigkeit. Das Verfahren umfasst die Schritte: automatisches Anordnen einer eine Flüssigkeit enthaltenden Schmutzflüssigkeit in einem Destillierbehälter einer Destillieranlage durch ein geregeltes Einleiten der Schmutzflüssigkeit in den Destillierbehälter, Erhitzen der in dem Destillierbehälter angeordneten Schmutzflüssigkeit zum Verdampfen der Flüssigkeit, Verflüssigen einer verdampften Flüssigkeit in dem Destillierbehälter durch Kondensieren, Sammeln der kondensierten Flüssigkeit und Entfernen eines Destillationsrückstands aus dem Destillierbehälter. Ferner betrifft die Erfindung eine Anlage zum Destillieren einer Flüssigkeit aus einer Schmutzflüssigkeit.

Derartige Verfahren zum Destillieren einer Flüssigkeit aus einer Schmutzflüssigkeit sind im Stand der Technik in verschiedenen Ausführungsformen bekannt und dienen dem Rückgewinnen der Flüssigkeit aus der Schmutzflüssigkeit. Unter einer Flüssigkeit im Sinne der Erfindung wird jede Flüssigkeit verstanden, welche sich durch Destillieren von der Schmutzflüssigkeit trennen lässt, beispielsweise ein Lösungsmittel wie Wasser oder Perchlorethylen.

Beispielsweise können Metallteile von einem insbesondere fetthaltigen und/oder ölhaltigen Schmutz befreit werden, indem die Metallteile mit einem heißen Dampf eines zum Lösen von Fetten und/oder Ölen geeigneten Lösungsmittels beaufschlagt werden. Der heiße Dampf löst den fetthaltigen und/oder ölhaltigen Schmutz von den Metallteilen und nimmt diesen auf, wodurch die Metallteile von dem fetthaltigen und/oder ölhaltigen Schmutz gereinigt werden. Durch ein anschließendes Kondensieren des Dampfs wird dann eine Schmutzflüssigkeit gebildet, welche das Lösungsmittel und den darin gelösten fetthaltigen und/oder ölhaltigen Schmutz umfasst.

Es ist von großem wirtschaftlichem und ökologischem Interesse, zum einen möglichst viel Flüssigkeit mehrfach zu verwenden und zum anderen möglichst wenig Destillationsrückstand zu entsorgen. Zudem wird angestrebt, möglichst wenig Energie aufzuwenden und eine möglichst hohe Rückgewinnleistung zu erreichen.

Es ist daher eine Aufgabe der Erfindung, ein Verfahren zum Destillieren einer Flüssigkeit aus einer Schmutzflüssigkeit vorzuschlagen, welches einfach handhabbar ist, hocheffektiv und sehr effizient ist. Ferner ist es Aufgabe der Erfindung, eine einfach handhabbare, hocheffektive und sehr effiziente Destillieranlage bereitzustellen.

Die DE 29 34 440 A1 offenbart dagegen eine Vorrichtung und ein Verfahren zum Rückgewinnen von Methylenchlorid aus einem Gemisch mit Polyurethanschaum mittels Destillierens. In US 4,534,830 A und US 4,536,256 A sind jeweils eine Vorrichtung und ein Verfahren beschrieben, um mittels Destillierens aus einem verschmutzten Lösungsmittel ein sauberes Lösungsmittel zu gewinnen.

Ein Gegenstand der Erfindung ist ein Verfahren zum Destillieren einer Flüssigkeit aus einer Schmutzflüssigkeit nach Anspruch 1. Das Verfahren umfasst die Schritte: Automatisches Anordnen einer eine Flüssigkeit enthaltenden Schmutzflüssigkeit in einem Destillierbehälter einer Destillieranlage durch ein geregeltes Einleiten der Schmutzflüssigkeit in den Destillierbehälter, Erhitzen der in dem Destillierbehälter angeordneten Schmutzflüssigkeit zum Verdampfen der Flüssigkeit, Verflüssigen einer verdampften Flüssigkeit in dem Destillierbehälter durch Kondensieren, Sammeln der kondensierten Flüssigkeit und Entfernen eines Destillationsrückstands aus dem Destillierbehälter. Das gegenständliche Verfahren wird von einer Destillieranlage ausgeführt und ermöglicht ein Rückgewinnen der Flüssigkeit mittels einer Destillation. Dazu wird die Schmutzflüssigkeit auf eine Temperatur oberhalb eines Siedepunkts der Flüssigkeit und unterhalb eines Siedepunkts jedes in der Schmutzflüssigkeit enthaltenen Schmutzes erhitzt.

Die Schmutzflüssigkeit wird mit einem Wasserdampf erhitzt. Wasserdampf weist eine hohe Wärmeabgabekapazität auf und wirkt einem Überhitzen der Schmutzflüssigkeit entgegen. Die verdampfende Flüssigkeit und der Wasserdampf bilden einen sich selbst stabilisierenden Regelkreis. Wenn eine Verdampfungsrate der Flüssigkeit steigt, sinkt ein Dampfdruck und damit eine Temperatur des Wasserdampfes, was ein Sinken der Verdampfungsrate der Flüssigkeit verursacht. Wenn umgekehrt eine Verdampfungsrate der Flüssigkeit sinkt, steigt der Dampfdruck und damit die Temperatur des Wasserdampfes, was ein Steigen der Verdampfungsrate der Flüssigkeit verursacht.

Mangels Überhitzens der Schmutzflüssigkeit wird somit kein fester Destillationsrückstand in dem Destillierbehälter gebildet, wodurch ein Reinigen des Destillierbehälters, beispielsweise mittels eines an einer Innenfläche des Destillierbehälters manuell oder automatisch bewegten Schabers, entbehrlich wird. Entsprechend wird ein kontinuierlicher Destillierprozess ermöglicht, welcher nicht von wiederkehrenden Reinigungszeitfenstern unterbrochen ist. Abgesehen davon weist die Destillieranlage weniger Verschleißteile wie beispielsweise einen Schaber auf, wodurch ein von der Destillieranlage benötigter Wartungsaufwand verringert und eine Lebensdauer der Destillieranlage erhöht sind.

Der Wasserdampf wird in einer Heizeinrichtung der Destillieranlage erzeugt und weist beispielsweise einen maximalen Dampfdruck von 6 bar und/oder eine maximale Siedetemperatur oder Dampftemperatur von 160 °C auf.

Vorteilhaft umfasst das Entfernen des Destillationsrückstands ein automatisches Ablassen einer Rückstandsflüssigkeit aus dem Destillierbehälter. Der Destillationsrückstand umfasst eine Rückstandsflüssigkeit, welche aus dem Destillierbehälter abgelassen werden kann. Die Rückstandsflüssigkeit weist eine höhere Schmutzkonzentration als die eingeleitete Schmutzflüssigkeit auf. Die Rückstandsflüssigkeit wird während des normalen Betriebs der Destillieranlage chargenweise abgelassen werden. Während des Ablassens der Rückstandsflüssigkeit wird keine Schmutzflüssigkeit eingeleitet, d.h. das Ablassen der Rückstandsflüssigkeit und das Einleiten der Schmutzflüssigkeit erfolgen nicht gleichzeitig, sondern alternierend.

Die Rückstandsflüssigkeit kann mittels einer Ablasspumpe insbesondere automatisch abgelassen werden, wenn eine Regelgröße einen vorbestimmten Schwellwert überschreitet oder unterschreitet. Als die Regelgröße wird vorteilhaft eine Verdampfungsrate der Flüssigkeit verwendet. Wenn bei einer Temperatur der Schmutzflüssigkeit oberhalb der Siedetemperatur der Flüssigkeit die Verdampfungsrate eine vorbestimmte mindeste Verdampfungsrate unterschreitet, enthält die Schmutzflüssigkeit nur noch eine geringe Menge von Flüssigkeit und kann als die Rückstandsflüssigkeit abgelassen werden. Die mindeste Verdampfungsrate wird derart vorbestimmt, dass eine Effektivität des Verfahrens, d.h. ein Rückgewinnungsanteil, optimiert ist.

In manchen Ausführungsformen umfasst das Sammeln der kondensierten Flüssigkeit ein Entfernen der kondensierten Flüssigkeit aus dem Destillierbehälter und ein Anordnen der kondensierten Flüssigkeit in einem von dem Destillierbehälter verschiedenen mit dem Destillierbehälter fluidisch trennbar verbundenen Zwischenbehälter der Destillieranlage. Die gesammelte Flüssigkeit verbleibt also innerhalb der Destillieranlage. Auf diese Weise kann der Zwischenbehälter beispielsweise für Regelungszwecke verwendet werden.

Das Verfahren umfasst bevorzugt ein geregeltes Entfernen der gesammelten Flüssigkeit aus dem Zwischenbehälter. Beispielsweise kann eine Füllhöhe der gesammelten Flüssigkeit in dem Zwischenbehälter als eine Regelgröße verwendet werden. Wenn die Füllhöhe eine vorbestimmte Maximalfüllhöhe überschreitet, wird die Flüssigkeit aus dem Zwischenbehälter abgelassen. Eine Ablassfrequenz, d.h. eine Anzahl von Ablassungen pro Zeit, oder eine bei einer bekannten Volumenkapazität des Zwischenbehälters Ablassrate, d.h. ein abgelassenes Volumen pro Zeit, kann als eine Leistung der Destillieranlage gemessen werden. Die Ablassfrequenz bzw. die Ablassrate bestimmen entsprechend eine Effizienz des Destillierverfahrens.

Bei dem geregelten Entfernen wird die gesammelte Flüssigkeit aus dem Zwischenbehälter vorteilhaft für eine vorbestimmte Zeitdauer abgelassen, wenn ein eine vorbestimmte Maximalfüllhöhe der Flüssigkeit definierender Füllstandsensor des Zwischenbehälters ein Überschreiten der definierten vorbestimmten Maximalfüllhöhe detektiert. Die vorbestimmte Zeitdauer kann derart gewählt werden, dass nach dem Auslassen der gesammelten Flüssigkeit eine Menge von Flüssigkeit in dem Zwischenbehälter verbleibt. Bei dieser Wahl wird der Zwischenbehälter während der vorbestimmten Zeitdauer nicht vollständig geleert. Alternativ kann die vorbestimmte Zeitdauer derart gewählt werden, dass die gesammelte Flüssigkeit bei jedem Auslassen vollständig aus dem Zwischenbehälter abgelassen wird.

In manchen Ausführungsformen stellt eine Vakuumpumpe in dem Destillierbehälter einen Arbeitsdruck bereit, welcher geringer ist als ein Luftdruck außerhalb der Destillieranlage. Mit anderen Worten erfolgt in diesen Ausführungsformen eine Vakuumdestillation der Flüssigkeit. Infolge des geringeren Arbeitsdrucks verdampft die Flüssigkeit bei einer niedrigeren Siedetemperatur. Aufgrund der niedrigeren Siedetemperatur kann ein Zersetzen der Flüssigkeit und eines in der Flüssigkeit enthaltenen Schmutzes infolge des Erhitzens vermieden werden.

Alternativ dazu kann die Vakuumpumpe in dem Zwischenbehälter einen Druck bereitstellen, welcher geringer ist als ein Luftdruck außerhalb der Destillieranlage. Wenn die Vakuumpumpe mit dem Zwischenbehälter fluidisch verbunden ist, senkt sie den Druck in dem Zwischenbehälter und über die fluidische Verbindung mit dem Destillierbehälter ebenso den Arbeitsdruck in dem Destillierbehälter.

Bei einem Vakuumdestillationsverfahren wird idealerweise vor dem Auslassen der gesammelten Flüssigkeit ein Druck in dem Zwischenbehälter erhöht, bis er gleich dem Luftdruck außerhalb des Zwischenbehälters ist, und nach dem Auslassen der gesammelten Flüssigkeit ein Druck in dem Zwischenbehälter verringert, bis er gleich dem Arbeitsdruck ist. Mit anderen Worten wirkt der Zwischenbehälter im Falle einer Vakuumdestillation als ein Ausschleusbehälter für die gesammelte Flüssigkeit. Das Ausschleusen der Flüssigkeit erfolgt, wenn der Zwischenbehälter von dem Destillierbehälter fluidisch getrennt ist. Auf diese Weise bleibt der Arbeitsdruck in dem Destillierbehälter geringer als der Luftdruck außerhalb der Destillieranlage, und die Vakuumdestillation kann während des Ausschleusens der gesammelten Flüssigkeit aus dem Zwischenbehälter fortgesetzt werden.

In vorteilhaften Ausführungsformen wird bei dem geregelten Einleiten die Schmutzflüssigkeit von einer Einleitpumpe zugeführt, wenn ein eine Sollfüllhöhe der Schmutzflüssigkeit definierender Füllstandsensor des Destillierbehälters ein Unterschreiten der definierten Sollfüllhöhe detektiert. Der Füllstandsensor stellt sicher, dass eine Füllhöhe der Schmutzflüssigkeit während des Betriebs der Destillieranlage fast immer gleich der definierten Sollfüllhöhe ist und nur unwesentlich und kurzzeitig geringer als die definierte Sollfüllhöhe ist. Die Füllhöhe wird also als eine Regelgröße für das Einleiten von Schmutzflüssigkeit verwendet.

In anderen Ausführungsformen wird die verdampfte Flüssigkeit von einem in dem Destillierbehälter angeordneten Kondensator verflüssigt. Der Kondensator kühlt das verdampfte Lösungsmittel aktiv, beispielsweise mittels eines Kühlfluids, und beschleunigt ein Kondensieren der verdampften Flüssigkeit, wodurch die Effizienz des Destillierverfahrens erhöht wird.

Auch ein Gegenstand der Erfindung ist eine Anlage zum Destillieren einer Flüssigkeit aus einer Schmutzflüssigkeit, kurz eine Destillieranlage, mit einem Destillierbehälter, einem eine Sollfüllhöhe einer Schmutzflüssigkeit definierenden und in dem Destillierbehälter angeordneten Füllstandsensor zum Detektieren einer Füllhöhe der Schmutzflüssigkeit, einer mit dem Destillierbehälter fluidisch verbundenen Einleitpumpe zum Einleiten der Schmutzflüssigkeit, einer mit dem Destillierbehälter thermisch verbundenen und an einer Außenseite des Destillierbehälters angeordneten Heizeinrichtung zum Erhitzen der Schmutzflüssigkeit und einem mit der Einleitpumpe, dem Füllstandsensor und der Heizeinrichtung elektrisch verbundenen Steuergerät. Das Steuergerät ist konfiguriert, Signale des Füllstandsensors zu empfangen, und die Einleitpumpe abhängig von den empfangenen Signalen zu betätigen. Die Destillieranlage erlaubt ein geregeltes Einleiten der Schmutzflüssigkeit. Zudem ist das Steuergerät konfiguriert, die Heizeinrichtung zu betätigen. Die Destillieranlage erlaubt auch ein gesteuertes Erhitzen der eingeleiteten Schmutzflüssigkeit.

Die Heizeinrichtung umfasst einen Dampfbehälter für einen Wasserdampf mit einer flachen Heizfläche, welche mit einem flachen Boden des Destillierbehälters in Anlage ist. Der flache Boden und die flache Heizfläche bewirken eine über den gesamten Boden des Destillierbehälters gleichmäßige Wärmeübertragung aus dem Wasserdampf in die Schmutzflüssigkeit.

Idealerweise sind eine Kontur der Heizfläche und eine Kontur der Außenfläche des Bodens identisch und/oder besteht zwischen der Heizfläche und der Außenfläche des Bodens eine vollflächige thermische Kopplung. Die vollflächige Anlage der Heizfläche mit der Außenfläche des Bodens vermeidet eine Wärmeübertragung in eine Umgebung der Destillieranlage und gewährleistet einen hohen Wirkungsgrad der Wärmeübertragung.

In günstigen Ausführungsformen ist die Heizfläche rechteckig und/oder ist die Außenfläche des Bodens rechteckig. Eine rechteckige Form, insbesondere eine quadratische Form, der Heizfläche oder der Außenfläche des Bodens ist einfach und kostengünstig in der Herstellung.

Vorteilhaft umfasst die Heizeinrichtung einen gegenüberliegend zu der Heizfläche angeordneten Boden, einen von dem Boden in das Innere des Dampfbehälters vorstehenden eine Sollfüllhöhe des Dampfbehälters definierenden Überlaufstutzen, einen von dem Boden in das Innere des Dampfbehälters weiter als der Überlaufstutzen vorstehenden Füllstutzen, eine an den Boden angeformte Rinne und einen eine in einer lateralen Stirnfläche der Rinne ausgebildete Öffnung durchgreifenden und die Öffnung verschließenden Rohrheizkörper mit einer Mehrzahl von Heizwendeln, welche sich im montierten Zustand des Rohrheizkörpers von ausgehend von einem Flansch in die Rinne erstrecken. Der Boden der Heizeinrichtung erstreckt sich beabstandet und parallel zu der Heizfläche. Die Heizeinrichtung weist Seitenflächen auf, welche sich ausgehend von einem Rand des Bodens und einem Rand einer die Heizfläche bildenden Decke des Dampfbehälters erstrecken und den Boden und die Decke umlaufend verbinden.

Dank der unterschiedlich weit von dem Boden vorstehenden Füll- und Überlaufstutzen, steht der Überlaufstutzen stets von einem in dem Dampfbehälter angeordneten maximal mit dem Überlaufstutzen bündigen Wasserspiegel vor. Dadurch ist der Überlaufstutzen während des Betriebs der Destillieranlage stets im Wasserdampf angeordnet, so dass ein Dampfdruck des Wassers an dem Füllstutzen messbar ist. Ein überschüssig eingeleitetes Wasser fließt durch den Überlaufstutzen ab, so dass ein Überfüllen des Dampfbehälters ausgeschlossen ist.

Ferner kann die Heizeinrichtung ein Überdruckventil, einen Dampfdrucksensor und einen Wasseranschluss umfassen, welche jeweils mit dem Füllstutzen fluidisch verbunden sind. Wenn der Überlaufstutzen und der Wasseranschluss geschlossen sind, kann der Dampfdrucksensor einen Dampfdruck in dem Dampfbehälter der Heizeinrichtung detektieren. Der detektierte Dampfdruck ist ein Betriebsparameter der Destillieranlage und kann auch für Regelungszwecke verwendet werden. Das Überdruckventil ist konfiguriert, sich bei einem vorbestimmten Maximaldampfdruck zu öffnen und Wasserdampf abzulassen, um den Dampfdruck unter den vorbestimmten Maximaldampfdruck zu senken. Auf diese Weise wird ein Dampfdruck in dem Dampfbehälter der Heizeinrichtung begrenzt, wodurch eine druckbedingte Schadensgefahr der Heizeinrichtung verringert wird. Die Heizeinrichtung wird bei geöffnetem Wasseranschluss gefüllt, wobei der Wasseranschluss nach dem Füllen der Heizeinrichtung verschlossen wird.

In vielen Ausführungsformen umfasst die Heizeinrichtung ein mit dem Füllstutzen fluidisch verbundenes Rohrkreuz, an welches das Überdruckventil, der Dampfdrucksensor und der Wasseranschluss angeschlossen sind. Dank dem Rohrkreuz können das Überdruckventil, der Dampfdrucksensor und der Wasseranschluss gleichzeitig mit dem Füllstutzen fluidisch verbunden sein. Entsprechend ist eine Mehrzahl von separaten Anschlüssen für jeweils eine der genannten Komponenten nicht erforderlich, wodurch die Heizeinrichtung einen einfachen Aufbau ausweist.

Idealerweise weist ein den Füllstutzen und das Rohrkreuz verbindendes Füllrohr eine Rohrwindung auf. Die Rohrwindung ist fluidisch zwischen dem Füllstutzen und dem Rohrkreuz angeordnet. Ein nach dem Füllen in der Rohrwindung angeordnetes Wasser verhindert ein Passieren von Wasserdampf aus dem Dampfbehälter durch die Rohrwindung. Zudem kann das Füllrohr zwischen dem Füllstutzen und der Rohrwindung ein Entlüftungsventil aufweisen. Durch das geöffnete Entlüftungsventil kann eine in dem Dampfbehälter nach dem Füllen des Dampfbehälters angeordnete Luft entweichen, so dass während eines Betriebs der Heizeinrichtung der Dampfbehälter ausschließlich Wasserdampf enthält. Wenn die Heizeinrichtung nach dem Betrieb ausgeschaltet wird, bildet sich nach einem Kondensieren des Wasserdampfs ein Vakuum in dem Dampfbehälter. Mittels des Dampfdrucksensors lässt sich im ausgeschalteten Zustand der Heizeinrichtung ein Leck der Heizeinrichtung daran erkennen, dass das Vakuum in dem Dampfbehälter allmählich schwächer wird.

Vorteilhaft umfasst die Anlage einen mit dem Destillierbehälter trennbar fluidisch verbundenen Zwischenbehälter für die kondensierte Flüssigkeit. Der Zwischenbehälter erlaubt ein unabhängiges Regeln des Auslassens der kondensierten Flüssigkeit und kann als ein Ausschleusbehälter bei einer Vakuumdestillation dienen.

Ferner kann die Anlage eine mit dem Zwischenbehälter fluidisch verbundene und mit dem Steuergerät elektrisch verbundene Vakuumpumpe umfassen. Dank der fluidischen Verbindung des Zwischenbehälters mit dem Destillierbehälter kann die Vakuumpumpe einen Arbeitsdruck in dem Destillierbehälter verringern.

Die Anlage umfasst einen in dem Destillierbehälter angeordneten und mit dem Steuergerät elektrisch verbundenen Kondensator. Der Kondensator beschleunigt ein Verflüssigen der verdampften Flüssigkeit und steigert die Effizienz der Destillieranlage. Der Kondensator kann einen Edelstahlsammler und eine Mehrzahl von Kupferrohren, insbesondere Spirorohre, umfassen, welche mit dem Edelstahlsammler fluidisch verbunden sind und während eines Betriebs des Kondensators von einem Kühlfluid durchströmt werden.

Der Destillierbehälter kann eine dem Boden gegenüberliegend angeordnete Decke, eine sich ausgehend von einem Rand des Bodens zu einem Rand der Decke erstreckenden und den Boden und die Decke umlaufend verbindenden Umfangswandung, einen in der Umfangswandung ausgebildeten Schmutzflüssigkeitsanschluss zum Einleiten der Schmutzflüssigkeit, eine in der Umfangswandung ausgebildete Auffangrinne zum Auffangen der kondensierten Flüssigkeit, einen in der Umfangswandung ausgebildeten mit der Auffangrinne fluidisch verbundenen Flüssigkeitsanschluss zum Entnehmen von kondensierter Flüssigkeit aus dem Destillierbehälter, einem in der Umfangswandung ausgebildeten Rückstandanschluss zum Ablassen einer Rückstandsflüssigkeit umfassen.

In manchen Ausführungsformen umfasst die Destillieranlage einen bezogen auf den Füllstandsensor gegenüberliegend zu dem Boden angeordneten Temperatursensor. Der Arbeitsdrucksensor und der Temperatursensor sind konfiguriert, eine Temperatur der verdampften Flüssigkeit zu detektieren. Die Temperatur kann zum Kontrollieren des Destillierverfahrens oder als Regelgröße des Destillierverfahrens verwendet werden.

Bevorzugt ist das Steuergerät konfiguriert, die Einleitpumpe zu stoppen, wenn von dem Füllstandsensor die vorbestimmte Sollfüllhöhe der Schmutzflüssigkeit detektiert wird, und die Einleitpumpe zu starten, wenn von dem Füllstandsensor nicht die vorbestimmte Sollfüllhöhe der Schmutzflüssigkeit detektiert wird. Die Konfiguration des Steuergeräts gewährleistet, dass die Füllhöhe der Schmutzflüssigkeit im Wesentlichen konstant bei der Sollfüllhöhe liegt.

Weiterhin kann das Steuergerät konfiguriert sein, die Schmutzflüssigkeit während einer Nachdestillationsdauer zu einer Rückstandsflüssigkeit werden zu lassen und dann die Rückstandsflüssigkeit automatisch abzulassen, wenn der Füllstandsensor nach einer mit einem Stoppen der Einleitpumpe beginnenden vorbestimmten Arbeitsdauer weiterhin die vorbestimmte Sollfüllhöhe detektiert. Eine nahezu konstante Füllhöhe der Schmutzflüssigkeit korrespondiert zu einer geringen Konzentration der Flüssigkeit in der Schmutzflüssigkeit. Die geringe Konzentration der Flüssigkeit entspricht einer starken Anreicherung des Schmutzes in der Schmutzflüssigkeit und wird durch das Nachdestillieren weiter verringert, wodurch die Schmutzflüssigkeit zu der Rückstandsflüssigkeit wird und abgelassen werden kann.

In einer anderen Ausführungsform umfasst die Destillieranlage einen in einer Umfangswandung des Zwischenbehälters angeordneten und mit dem Steuergerät verbundenen Füllstandsensor, einen in der Umfangswandung des Zwischenbehälters angeordneten und mit dem Steuergerät verbundenen Arbeitsdrucksensor und einen in einem Boden des Zwischenbehälters angeordneten Auslassabschluss zum Auslassen der Flüssigkeit. Der Zwischenbehälter ist für ein geregeltes Ablassen der gesammelten Flüssigkeit konfiguriert.

Idealerweise ist das Steuergerät konfiguriert, ein mit dem Auslassanschluss fluidisch verbundenes Flüssigkeitsauslassventil zu öffnen, wenn eine von dem Füllstandsensor detektierte Füllhöhe der Flüssigkeit eine vorbestimmte Maximalfüllhöhe erreicht oder überschreitet. Die Konfiguration des Steuergeräts vermeidet ein Überfüllen des Zwischenbehälters durch ein wiederholtes Auslassen der Flüssigkeit aus dem Zwischenbehälter.

Das Steuergerät kann konfiguriert sein, ein Flüssigkeitsauslassventil des Zwischenbehälters für eine vorbestimmte Zeitdauer zu öffnen, wenn eine von dem Füllstandsensor des Zwischenbehälters detektierte Füllhöhe der Flüssigkeit eine vorbestimmte Maximalfüllhöhe erreicht oder überschreitet. Über die vorbestimmte Zeitdauer wird eine Menge der jeweils ausgelassenen Flüssigkeit bestimmt. Die Destillieranlage umfasst vorteilhaft einen an dem Zwischenbehälter angeordneten Belüftungsanschluss mit einem mit dem Steuergerät elektrisch verbundenen Belüftungsventil zum Belüften des Zwischenbehälters. Der Belüftungsanschluss ist von dem Steuergerät automatisch betätigbar.

Besonders vorteilhaft ist die Destillieranlage zum Ausführen des erfindungsgemäßen Verfahrens konfiguriert.

Ein wesentlicher Vorteil des erfindungsgemäßen Verfahrens besteht in der Verwendung von Wasserdampf zum Erhitzen der Schmutzflüssigkeit. Dank der hohen Wärmeabgabekapazität wird zum einen eine hohe Energieeffizienz des Destillierverfahrens erreicht. Zum anderen bildet der Wasserdampf mit der verdampfenden Flüssigkeit einen sich selbst stabilisierenden Regelkreis. Dadurch wird ein Überhitzen der Schmutzflüssigkeit und in der Folge ein Zersetzen der Flüssigkeit oder ein Bilden eines festen Rückstands verhindert. Ein weiterer Vorteil kann in der vollständigen Regelbarkeit des Destillierverfahrens gesehen werden, was mit einer einfachen Handhabung einhergeht. Ferner ist vorteilhaft, dass eine hohe Reinheit und eine hoher Rückgewinnungsanteil der Flüssigkeit erreicht werden kann. Dies führt zu einer hohen Effektivität des Destillierverfahrens. Weiterhin vorteilhaft ist die erreichbare Kontinuität des Destillierprozesses, welche eine hohe Effizienz des Destillierverfahrens ermöglicht.

Weitere Merkmale und Vorteile der Erfindung sind anhand von verschiedenen Ausführungsformen und unter Bezugnahme auf die beigefügten Zeichnungen näher beschrieben. Es zeigt:
- Fig. 1: ein Blockdiagramm einer Destillieranlage gemäß einer Ausführungsform der Erfindung;
- Fig. 2: eine schematische Darstellung einer perspektivischen Ansicht der Heizeinrichtung der in Fig. 1 gezeigten Destillieranlage;
- Fig. 3: eine schematische Darstellung einer weiteren perspektivischen Ansicht der in Fig. 2 gezeigten Heizeinrichtung;
- Fig. 4: eine schematische Darstellung einer teilweisen Seitenansicht der in Fig. 1 gezeigten Destillieranlage;
- Fig. 5: eine schematische Darstellung einer Querschnittsansicht des Destillierbehälters der in Fig. 1 gezeigten Destillieranlage;
- Fig. 6: eine schematische Darstellung einer perspektivischen Seitenansicht der in Fig. 1 gezeigten Destillieranlage;
- Fig. 7: eine schematische Darstellung einer Vorderansicht der in Fig. 1 gezeigten Destillieranlage.

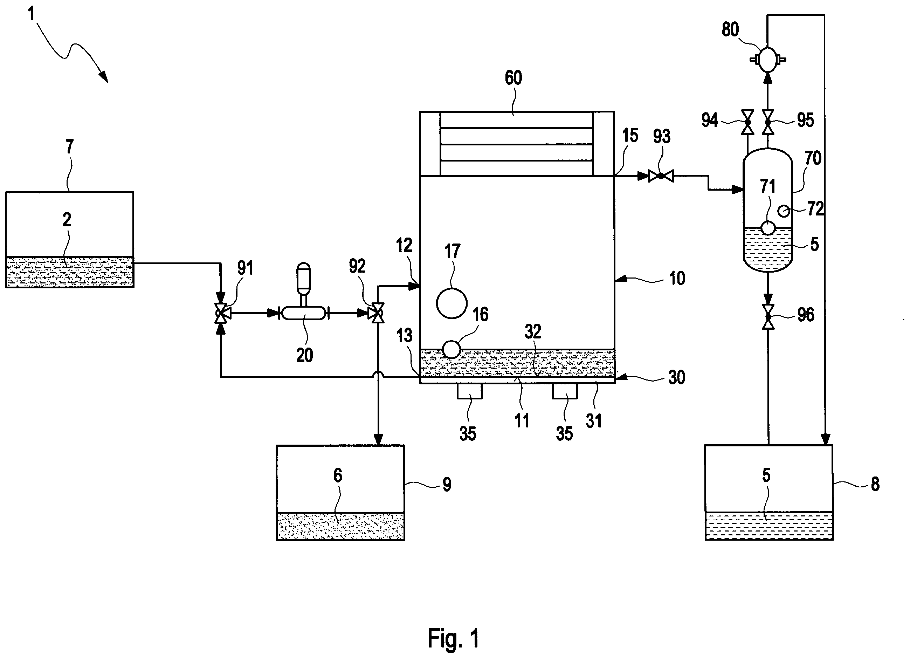

Fig. 1 zeigt ein Blockdiagramm einer Destillieranlage 1 gemäß einer Ausführungsform der Erfindung. Die Anlage 1 kann zum Destillieren einer Flüssigkeit 5 aus einer Schmutzflüssigkeit 2 eingesetzt werden. Wenn mit der Flüssigkeit 5 beispielsweise Metallteile von einem fetthaltigen oder ölhaltigen Schmutz befreit wurden, enthält die resultierende Schmutzflüssigkeit 2 die Flüssigkeit 5 und den in der Flüssigkeit 5 enthaltenen fetthaltigen oder ölhaltigen Schmutz.

Die Destillieranlage 1 umfasst einen Destillierbehälter 10, einen eine Sollfüllhöhe einer Schmutzflüssigkeit 2 definierenden und in dem Destillierbehälter 10 angeordneten Füllstandsensor 16 zum Detektieren einer definierten Füllhöhe der Schmutzflüssigkeit 2, eine mit dem Destillierbehälter 10 fluidisch verbundene Einleitpumpe 20 zum Einleiten der Schmutzflüssigkeit 2 und eine mit dem Destillierbehälter 10 thermisch verbundene und an einer Außenseite des Destillierbehälters 10 angeordnete Heizeinrichtung 30. Zu dem Destillierbehälter 10 gehören weiterhin ein Schmutzflüssigkeitsanschluss 12 zum Einleiten der Schmutzflüssigkeit 2 in den Destillierbehälter, ein Flüssigkeitsanschluss 15 zum Entnehmen von kondensierter Flüssigkeit 5 aus dem Destillierbehälter 10 und ein Rückstandanschluss 13 zum Ablassen einer einen Destillationsrückstand bildenden Rückstandsflüssigkeit 6 aus dem Destillierbehälter 10, in welcher der enthaltene Schmutz angereichert ist.

Zu der Destillieranlage 1 gehören ein erstes 3-Wege-Ventil 91 und ein zweites 3-Wege-Ventil 92, welche jeweils mit der Einleitpumpe 20 fluidisch verbunden sind. Das erste 3-Wege-Ventil 91 ist weiterhin mit dem Rückstandanschluss 13 fluidisch verbunden. An das erste 3-Wege-Ventil 91 ist zudem ein die Schmutzflüssigkeit 2 bereitstellender Schmutzflüssigkeitsbehälter 7 angeschlossen. Das zweite 3-Wege-Ventil 92 ist weiterhin mit dem Schmutzflüssigkeitsanschluss 12 fluidisch verbunden. An das zweite 3-Wege-Ventil 92 ist zudem ein die abgelassene Rückstandsflüssigkeit aufnehmender Rückstandbehälter 9 angeschlossen. Dank dieser relativen Anordnung der 3-WegeVentile 91, 92, der Einleitpumpe 20 und des Destillierbehälters 10 kann die Einleitpumpe 20 alternativ als eine Ablasspumpe 20 für die Rückstandsflüssigkeit verwendet werden.

Die Destillieranlage 1 umfasst ferner einen mit dem Destillierbehälter 10 mittels eines Verbindungsventils 93 trennbar fluidisch verbundenen Zwischenbehälter 70 für die kondensierte Flüssigkeit 5, einen dem Zwischenbehälter 70 zugeordneten Füllstandsensor 71, einen dem Zwischenbehälter 71 zugeordneten Arbeitsdrucksensor 72 und einen in einem Boden des Zwischenbehälters 70 angeordneten Auslassabschluss zum Auslassen der Flüssigkeit 5. Zu der Destillieranlage 1 gehört auch eine mit dem Zwischenbehälter 70 mittels eines Evakuierventils 95 trennbar fluidisch verbundene Vakuumpumpe 80. Ferner umfasst die Destillieranlage 1 einen an dem Zwischenbehälter 70 angeordneten Belüftungsanschluss mit einem mit dem Belüftungsanschluss fluidisch verbundenen Belüftungsventil 94 zum Belüften des Zwischenbehälters 70. Mit dem Auslassanschluss des Zwischenbehälters 70 ist ein Flüssigkeitsbehälter 8 zum Aufnehmen von rückgewonnener Flüssigkeit 5 mittels eines Flüssigkeitsauslassventils 96 trennbar fluidisch verbunden.

Ferner umfasst die Destillieranlage 1 einen Kondensator 60 sowie eine mit dem Destillierbehälter 10 thermisch verbundene und an einer Außenseite des Destillierbehälters 10 angeordnete Heizeinrichtung 30. Die Heizeinrichtung 30 weist zwei Rinnen 35 für Wasser und eine flache Heizfläche 32 auf, welche mit einem flachen Boden 11 des Destillierbehälters 10 in Anlage ist. Eine Außenfläche des Bodens 11 ist rechteckig.

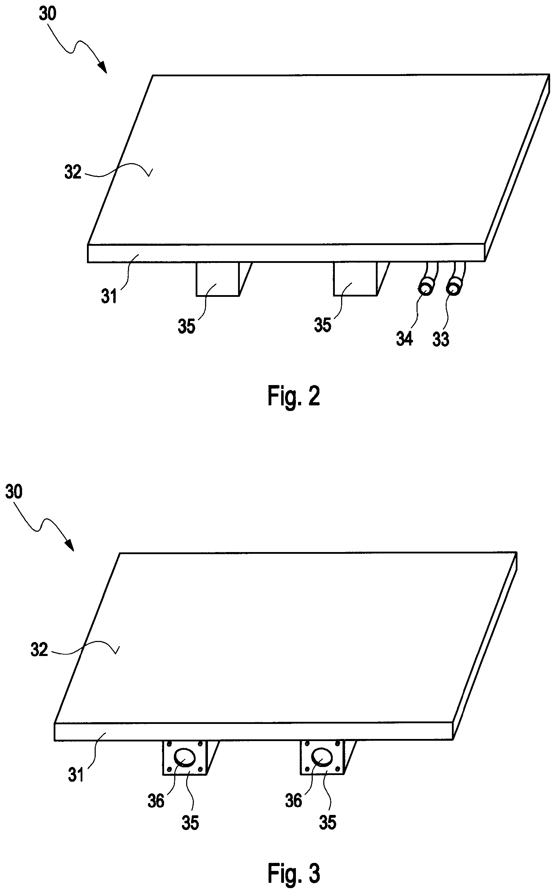

Fig. 2 zeigt eine schematische Darstellung einer perspektivischen Ansicht der Heizeinrichtung 30 der in Fig. 1 gezeigten Destillieranlage 1. Die Heizeinrichtung 30 umfasst einen Dampfbehälter 31 für einen Wasserdampf, welcher die flache Heizfläche 32 aufweist. Die Heizfläche 32 ist rechteckig. Eine Kontur der Heizfläche 32 und eine Kontur der Außenfläche des Bodens 11 des Destillierhehälters 10 sind identisch. Zwischen der Heizfläche 32 und der Außenfläche des Bodens 11 besteht eine vollflächige thermische Kopplung.

Die Heizeinrichtung 30 umfasst ferner einen gegenüberliegend zu der Heizfläche 32 angeordneten Boden, einen von dem Boden in das Innere des Dampfbehälters 31 Füllstutzen 33 zum Befüllen des Dampfbehälters 31 mit einem Wasser und einen von dem Boden in das Innere des Dampfbehälters 31 weniger weit als der Füllstutzen 33 vorstehenden eine Sollfüllhöhe des Wassers definierenden Überlaufstutzen 34. Zu der Heizeinrichtung 30 gehören weiterhin zwei an den Boden angeformte Rinnen 35. Beispielsweise kann der Überlaufstutzen 34 eine Sollfüllhöhe von 5 mm oder eine Sollfüllhöhe in einem Bereich von 2 mm bis 10 mm definieren. Dadurch wird sichergestellt, dass während des Betriebs der Heizeinrichtung 30 die Rinnen 35 mit Wasser gefüllt sind.

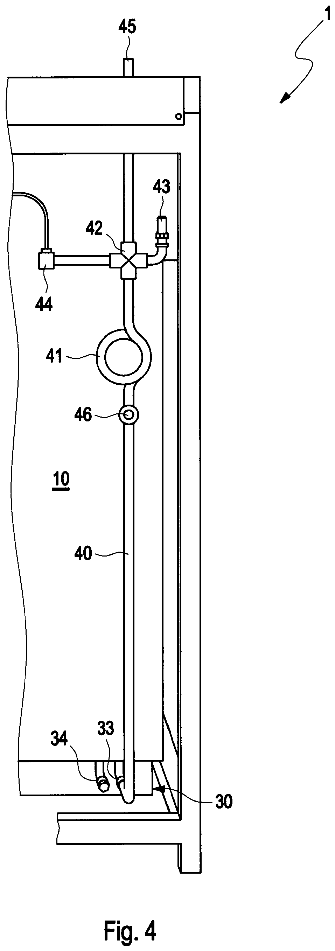

Fig. 3 zeigt eine schematische Darstellung einer weiteren perspektivischen Ansicht der in Fig. 2 gezeigten Heizeinrichtung 30. Jede Rinne 35 weist eine in einer lateralen Stirnfläche der Rinne 35 ausgebildete Öffnung 36 auf, welche von einem Heizelement durchgriffen und verschlossen werden kann. Fig. 4 zeigt eine schematische Darstellung einer teilweisen Seitenansicht der in Fig. 1 gezeigten Destillieranlage 1. Die Heizeinrichtung 30 der Destillieranlage 1 umfasst weiterhin ein Rohrkreuz 42 und ein mit dem Füllstutzen 33 fluidisch verbundenes Füllrohr 40, welches eine Rohrwindung 41 aufweist und den Füllstutzen 33 und das Rohrkreuz 42 fluidisch verbindet. Zu der Heizeinrichtung 30 gehören darüber hinaus ein Überdruckventil 43, ein Dampfdrucksensor 44 und ein Wasseranschluss 45, welche jeweils an das Rohrkreuz 42 angeschlossen und mit dem Füllstutzen 33 fluidisch verbunden sind. Das Überdruckventil 43 ist konfiguriert, sich bei einem Dampfdruck von mindestens 6 bar zu öffnen. Das Füllrohr 40 weist zwischen dem Füllstutzen 33 und der Rohrwindung 41 ein Entlüftungsventil 46 auf.

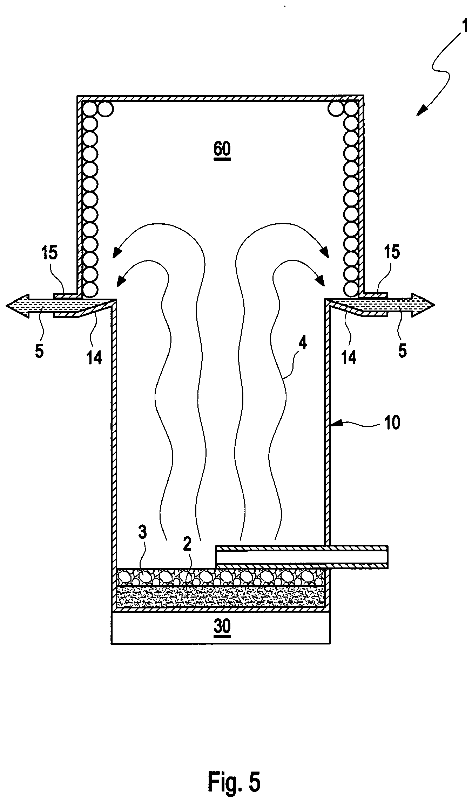

Fig. 5 zeigt eine schematische Darstellung einer Querschnittsansicht des Destillierbehälters 10 der in Fig. 1 gezeigten Destillieranlage 1. Der Destillierbehälter 10 umfasst eine dem Boden 11 gegenüberliegend angeordnete Decke und eine sich ausgehend von einem Rand des Bodens 11 zu einem Rand der Decke erstreckenden und den Boden 11 und die Decke umlaufend verbindende Umfangswandung. Der Schmutzflüssigkeitsanschluss 12, der Rückstandanschluss 13 und der Flüssigkeitsanschluss 14 sind jeweils in der Umfangswandung des Destillierbehälters 10 ausgebildet. Ferner weist der Destillierbehälter 10 eine in der Umfangswandung ausgebildete Auffangrinne 14 zum Auffangen der kondensierten Flüssigkeit 5 auf, welche mit dem Flüssigkeitsanschluss 15 fluidisch verbunden ist. Der Kondensator 60 kann einen Edelstahlsammler und eine Mehrzahl von Kupferrohren umfassen, welche mit dem Edelstahlsammler fluidisch verbunden sind, und ist bezogen auf die Auffangrinne 14 gegenüberliegend zu dem Boden 11 in dem Destillierbehälter 10 angeordnet.

Aus der Figur 5 ist zudem ersichtlich, dass die Schmutzflüssigkeit 2 den Boden 11 des Destillierbehälters vollständig bedeckt. Die von dem Füllstandsensor 16 definierte Sollfüllhöhe beträgt 50 mm und kann in einem Bereich von 30 mm bis 80 mm liegen. An einem in der Füllhöhe ausgebildeten Flüssigkeitsspiegel kann infolge des Einleitens der Schmutzflüssigkeit 2 oder des Verdampfens der Flüssigkeit 5 aus der Schmutzflüssigkeit 2 ein Schaum 3 angeordnet sein. Auf der von dem Boden abgewandten Seite des Flüssigkeitsspiegels, bzw. des Schaums 3, ist ein Flüssigkeitsdampf 4, d.h. eine verdampfte Flüssigkeit 5, angeordnet. Die Auffangrinne 14 ist in einer Normalenrichtung des Bodens 11 derart beabstandet zu dem Schaum 3 ausgebildet, dass der Schaum 3 nicht in die Auffangrinne 14 gelangt, wodurch ein Verschmutzen der kondensierten Flüssigkeit 5 ausgeschlossen und eine hohe Reinheit der rückgewonnenen Flüssigkeit 5 gewährleistet ist.

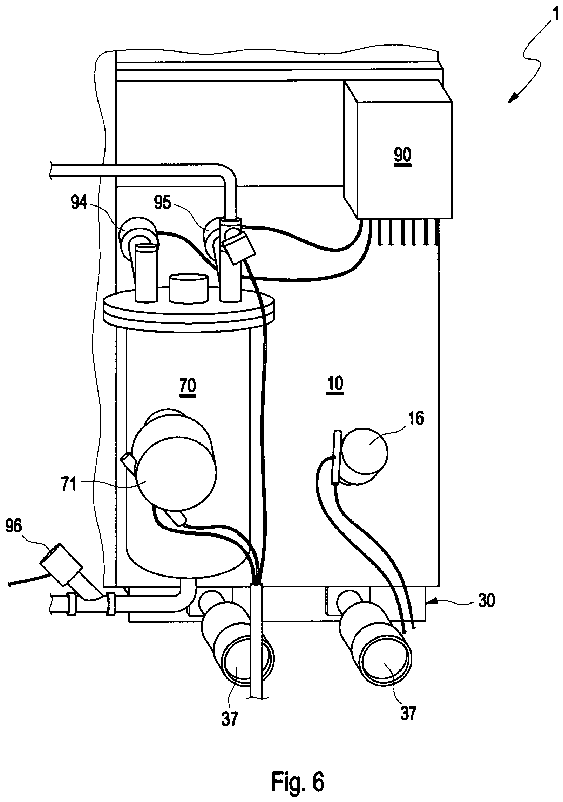

Fig. 6 zeigt eine schematische Darstellung einer perspektivischen Seitenansicht der in Fig. 1 gezeigten Destillieranlage 1. Die Destillieranlage 1 umfasst den in einer Umfangswandung des Zwischenbehälters 70 angeordneten Füllstandsensor 71, den in der Umfangswandung des Zwischenbehälters 70 angeordneten Arbeitsdrucksensor sowie zwei elektrisch betriebene Rohrheizkörper 37, welche als Heizelemente die Öffnungen 36 der Rinnen 35 der Heizeinrichtung 30 durchgreifen und verschließen. Ein Ventilsteuergerät 90 ist eine weitere Komponente der Destillieranlage 1. Das Ventilsteuergerät 90 ist mit dem ersten 3-Wege-Ventil 91, dem zweiten 3-Wege-Ventil 92, dem Verbindungsventil 93, dem Belüftungsventil 94, dem Evakuierventil 95 und dem Flüssigkeitsauslassventil 96 jeweils fluidisch verbunden und konfiguriert, die Ventile 91, 92, 93, 94, 95, 96 voneinander unabhängig pneumatisch zu betätigen, d.h. jeweils einzeln zu öffnen oder zu schließen.

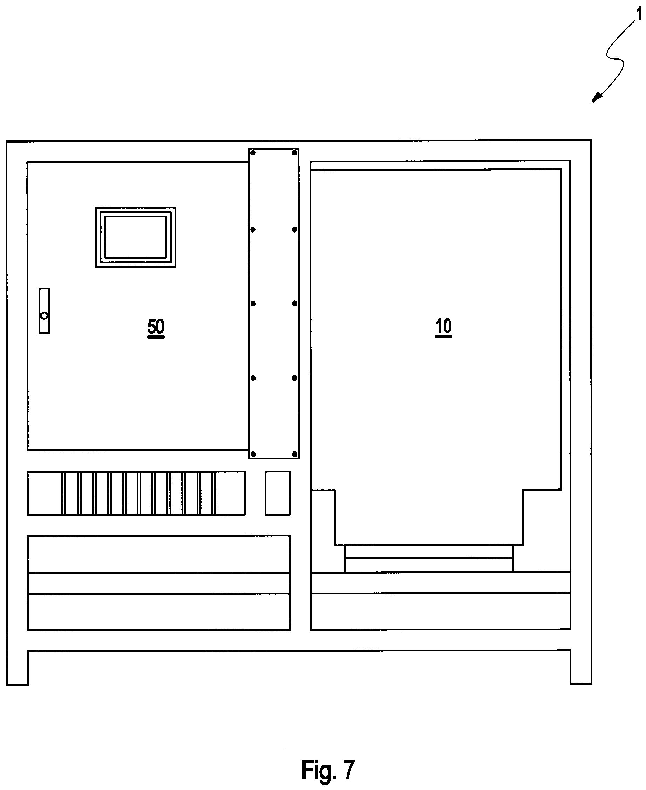

Fig. 7 zeigt eine schematische Darstellung einer Vorderansicht der in Fig. 1 gezeigten Destillieranlage 1. Zu der Destillieranlage 1 gehört zudem ein Steuergerät 50 mit einer Mensch-Maschine-Schnittstelle wie beispielsweise einem berührungsempfindlichen Bildschirm (touch screen), welches mit dem Füllstandsensor 16, dem Temperatursensor 17, der Einleitpumpe 20, den beiden Rohrheizkörpern 37, dem Kondensator 60, dem Füllstandsensor 71, dem Arbeitsdrucksensor 72, der Vakuumpumpe 80 und dem Ventilsteuergerät 90 elektrisch verbunden ist.

Das Steuergerät 50 ist konfiguriert, die Einleitpumpe 20 zu stoppen, wenn von dem Füllstandsensor 16 die vorbestimmte Sollfüllhöhe der Schmutzflüssigkeit 2 detektiert wird, und die Einleitpumpe 20 zu starten, wenn von dem Füllstandsensor 16 nicht die vorbestimmte Sollfüllhöhe detektiert wird. Das Steuergerät 50 ist weiterhin konfiguriert, das Flüssigkeitsauslassventil 96 für eine vorbestimmte Zeitdauer zu öffnen, wenn von dem Füllstandsensor 71 die vorbestimmte Maximalfüllhöhe der Flüssigkeit 5 in dem Zwischenbehälter 70 detektiert wird. Ferner ist das Steuergerät 50 konfiguriert, die Schmutzflüssigkeit während einer Nachdestillationsdauer zu einer Rückstandsflüssigkeit werden zu lassen und dann die Rückstandsflüssigkeit automatisch abzulassen, wenn der Füllstandsensor 16 nach einer mit einem Stoppen der Einleitpumpe 20 beginnenden vorbestimmten Arbeitsdauer weiterhin die vorbestimmte Sollfüllhöhe detektiert.

Vor dem Betrieb der Destillieranlage 1 wird der Dampfbehälter 31 der Heizeinrichtung durch Einleiten eines Wassers in den Wasseranschluss 45 gefüllt, bis das Wasser aus dem Überlaufstutzen 34 fließt. Dann werden der Wasseranschluss 45 und der Überlaufstutzen 34 geschlossen.

Während des Betriebs der Destillieranlage 1 wird die Destillieranlage 1 von dem Steuergerät 50 gesteuert. Die die Flüssigkeit 5 enthaltende Schmutzflüssigkeit 2 wird durch ein geregeltes Einleiten der Schmutzflüssigkeit 2 in den Destillierbehälter 10 der Destillieranlage 1 automatisch in dem Destillierbehälter 10 angeordnet. Dazu stellt das Steuergerät 50 das erste 3-Wege-Ventil 91 und das zweite 3-Wege-Ventil 92 derart, dass die Einleitpumpe 20 mit dem Schmutzflüssigkeitsbehälter 7 und dem Schmutzflüssigkeitsanschluss 12 des Destillierbehälters 10 fluidisch verbunden ist, und startet die Einleitpumpe 20.

Wenn der die Sollfüllhöhe der Schmutzflüssigkeit 2 definierende Füllstandsensor 16 des Destillierbehälters 10 ein Unterschreiten der definierten Sollfüllhöhe detektiert, startet das Steuergerät 50 die Einleitpumpe 20. Die Schmutzflüssigkeit 2 wird von der Einleitpumpe 20 aus dem Schmutzflüssigkeitsbehälter 7 in den Destillierbehälter 10 eingeleitet. Wenn der Füllstandsensor 16 ein Erreichen der definierten Sollfüllhöhe detektiert, stoppt das Steuergerät 50 die Einleitpumpe 20.

Wenn die Schmutzflüssigkeit 2 in dem Destillierbehälter 10 angeordnet ist, betätigt das Steuergerät 50 die beiden Rohrheizkörper 37, um in dem Dampfbehälter 31 der Heizvorrichtung 30 einen Wasserdampf mit einer maximalen Temperatur von 160 °C und mit einem maximalen Dampfdruck von 6 bar zu erzeugen.

Zum Verdampfen der Flüssigkeit 5 wird die in dem Destillierbehälter 10 angeordnete Schmutzflüssigkeit 2 mit dem Wasserdampf erhitzt. Die verdampfte Flüssigkeit 5 wird in dem Destillierbehälter 10 von dem in dem Destillierbehälter 10 angeordneten Kondensator 60 durch Kondensieren verflüssigt.

Die kondensierte Flüssigkeit 5 wird gesammelt. Dazu wird die kondensierte Flüssigkeit 5 aus dem Destillierbehälter 10 entfernt und in dem von dem Destillierbehälter 10 verschiedenen mit dem Destillierbehälter 10 fluidisch verbundenen Zwischenbehälter 70 der Destillieranlage 1 angeordnet.

Die gesammelte Flüssigkeit 5 wird aus dem Zwischenbehälter 70 geregelt entfernt. Wenn der die vorbestimmte Maximalfüllhöhe der Flüssigkeit 5 definierende Füllstandsensor 71 des Zwischenbehälters 70 ein Überschreiten der definierten vorbestimmten Maximalfüllhöhe detektiert, öffnet das Steuergerät 50 das Flüssigkeitsauslassventil 96 für eine vorbestimmte Zeitdauer, welche 10 Sekunden (s) betägt und zwischen 5 s und 20 s liegen kann. Die gesammelte Flüssigkeit 5 wird für die vorbestimmten Zeitdauer aus dem Zwischenbehälter 70 in den Flüssigkeitsbehälter 8 ausgelassen.

Wenn eine Nachdestillationsdauer abgelaufen ist und/oder wenn seit dem letzten Entfernen des Destillationsrückstands ein vorbestimmte Menge von Flüssigkeit 5 aus dem Zwischenbehälter 70 ausgelassen ist, wird der Destillationsrückstand aus dem Destillierbehälter 10 automatisch entfernt, wobei die Rückstandflüssigkeit 6 aus dem Destillierbehälter 10 automatisch in den Rückstandbehälter 10 abgelassen wird. Dazu stellt das Steuergerät 50 das erste 3-Wege-Ventil 91 und das zweite 3-Wege-Ventil 92 derart, dass die Einleitpumpe 20 mit dem Rückstandbehälter 9 und dem Rückstandsanschluss 13 des Destillierbehälters 10 fluidisch verbunden ist und als eine Ablasspumpe fungiert, und startet die Einleitpumpe 20.

Wenn die Flüssigkeit 5 eine Vakuumdestillation erfordert, stellt die Vakuumpumpe 80 in dem Zwischenbehälter 70 einen von dem Arbeitsdrucksensor 72 detektierten Druck und mithin in dem Destillierbehälter 10 einen Arbeitsdruck bereit, welcher geringer ist als ein Luftdruck außerhalb der Destillieranlage 1. Vor dem Auslassen der gesammelten Flüssigkeit 5 wird der Druck in dem Zwischenbehälter 70 erhöht, bis er gleich dem Luftdruck außerhalb der Destillieranlage 1 ist. Dazu schließt das Steuergerät 50 das Verbindungsventil 93, öffnet das Belüftungsventil 94 des Zwischenbehälters 70 und stoppt die Vakuumpumpe 80.

Nach dem Auslassen der gesammelten Flüssigkeit 5 wird der Druck in dem Zwischenbehälter 70 verringert, bis der Arbeitsdrucksensor 72 einen Druck gleich dem Arbeitsdruck in dem Destillierbehälter 10 ist. Dazu schließt das Steuergerät 50 das Belüftungsventil 94, startet die Vakuumpumpe 80 und startet die Vakuumpumpe. Wenn der Druck in dem Zwischenbehälter 70 gleich dem Arbeitsdruck ist, öffnet das Steuergerät 50 das Verbindungsventil 93.

### Bezugszeichenliste

- 1: Destillieranlage
- 2: Schmutzflüssigkeit
- 3: Schaum
- 4: Flüssigkeitsdampf
- 5: Flüssigkeit
- 6: Rückstandsflüssigkeit
- 7: Schmutzflüssigkeitsbehälter
- 8: Flüssigkeitsbehälter
- 9: Rückstandbehälter
- 10: Destillierbehälter
- 11: Boden
- 12: Schmutzflüssigkeitsanschluss
- 13: Rückstandanschluss
- 14: Auffangrinne
- 15: Flüssigkeitsanschluss
- 16: Füllstandsensor
- 17: Temperatursensor
- 20: Einleit-/Ablasspumpe
- 30: Heizeinrichtung
- 31: Dampfbehälter
- 32: Heizfläche
- 33: Füllstutzen
- 34: Überlaufstutzen
- 35: Rinne
- 36: Öffnung
- 37: Rohrheizkörper
- 40: Füllrohr
- 41: Rohrwindung
- 42: Rohrkreuz
- 43: Überdruckventil
- 44: Dampfdrucksensor
- 45: Wasseranschluss
- 46: Entlüftungsventil
- 50: Steuergerät
- 60: Kondensator
- 70: Zwischenbehälter
- 71: Füllstandssensor
- 72: Arbeitsdrucksensor
- 80: Vakuumpumpe
- 90: Ventileinheit
- 91: erstes 3-Wege-Ventil
- 92: zweites 3-Wege-Ventil
- 93: Verbindungsventil
- 94: Belüftungsventil
- 95: Evakuierventil
- 96: Flüssigkeitsauslassventil

## Patentansprüche

1. Verfahren zum Destillieren einer Flüssigkeit (5) aus einer Schmutzflüssigkeit (2), umfassend die Schritte:
• Automatisches Anordnen einer eine Flüssigkeit (5) enthaltenden Schmutzflüssigkeit (2) in einem Destillierbehälter (10) einer Destillieranlage (1) durch ein geregeltes Einleiten der Schmutzflüssigkeit (2) in den Destillierbehälter (10);
• Erhitzen der in dem Destillierbehälter (10) angeordneten Schmutzflüssigkeit (2) zum Verdampfen der Flüssigkeit (5);
• Verflüssigen einer verdampften Flüssigkeit (5) in dem Destillierbehälter (10) durch Kondensieren;
• Sammeln der kondensierten Flüssigkeit (5);
• Entfernen eines Destillationsrückstands aus dem Destillierbehälter (10),
**dadurch gekennzeichnet, dass**
die Schmutzflüssigkeit (2) mit einem in einer Heizeinrichtung (30) der Destillieranlage (1) erzeugten Wasserdampf erhitzt wird, wobei aus einem Dampfbehälter (31) der Heizeinrichtung (30), welcher eine flache Heizfläche (32) aufweist, welche mit einer Außenfläche eines flachen Bodens (11) des Destillierbehälters (10) in Anlage ist, eine Wärme gleichmäßig in die Schmutzflüssigkeit (2) übertragen wird.

2. Verfahren nach Anspruch 1,
**dadurch gekennzeichnet, dass**
das Entfernen des Destillationsrückstands (6) ein automatisches Ablassen einer Rückstandsflüssigkeit (6) aus dem Destillierbehälter (10) umfasst.

3. Verfahren nach einem der Ansprüche 1 oder 2,
**dadurch gekennzeichnet, dass**
das Sammeln der kondensierten Flüssigkeit (5) ein Entfernen der kondensierten Flüssigkeit (5) aus dem Destillierbehälter (10) und ein Anordnen der kondensierten Flüssigkeit (5) in einem von dem Destillierbehälter (10) verschiedenen mit dem Destillierbehälter (10) fluidisch trennbar verbundenen Zwischenbehälter (70) der Destillieranlage (1) umfasst.

4. Verfahren nach Anspruch 3,
**gekennzeichnet durch**
ein geregeltes Entfernen der gesammelten Flüssigkeit (5) aus dem Zwischenbehälter (70).

5. Verfahren nach Anspruch 4,
**dadurch gekennzeichnet, dass**
bei dem geregelten Entfernen die gesammelte Flüssigkeit! (5) aus dem Zwischenbehälter (70) für eine vorbestimmte Zeitdauer abgelassen wird, wenn ein eine vorbestimmte Maximalfüllhöhe der Flüssigkeit (5) definierender Füllstandsensor des Zwischenbehälters (70) ein Überschreiten der definierten vorbestimmten Maximalfüllhöhe detektiert.

6. Verfahren nach einem der Ansprüche 1 bis 5,
**dadurch gekennzeichnet, dass**
eine Vakuumpumpe (80) in dem Destillierbehälter (10) einen Arbeitsdruck bereitstellt, welcher geringer ist als ein Luftdruck außerhalb der Destillieranlage (1).

7. Verfahren nach Anspruch 6,
**dadurch gekennzeichnet, dass**
die Vakuumpumpe (80) in dem Zwischenbehälter (70) einen Druck bereitstellt, welcher geringer ist als ein Luftdruck außerhalb der Destillieranlage (1).

8. Verfahren nach Anspruch 7,
**dadurch gekennzeichnet, dass**
vor dem Auslassen der gesammelten Flüssigkeit (5) ein Druck in dem Zwischenbehälter (70) erhöht wird, bis er gleich dem Luftdruck außerhalb des Zwischenbehälters (70) ist, und nach dem Auslassen der gesammelten Flüssigkeit (5) ein Druck in dem Zwischenbehälter (70) verringert wird, bis er gleich dem Arbeitsdruck ist.

9. Verfahren nach einem der Ansprüche 1 bis 8,
**dadurch gekennzeichnet, dass**
bei dem geregelten Einleiten die Schmutzflüssigkeit (2) von einer Einleitpumpe (20) eingeleitet wird, wenn ein eine Sollfüllhöhe der Schmutzflüssigkeit (2) definierender Füllstandsensor (16) des Destillierbehälters (10) ein Unterschreiten der definierten Sollfüllhöhe detektiert.

10. Verfahren nach einem der Ansprüche 1 bis 9,
**dadurch gekennzeichnet, dass**
die verdampfte Flüssigkeit (5) von einem in dem Destillierbehälter (10) angeordneten Kondensator (60) verflüssigt wird.

11. Anlage (1) zum Destillieren einer Flüssigkeit (5) aus einer Schmutzflüssigkeit (2), mit einem Destillierbehälter (10), einem eine Sollfüllhöhe einer Schmutzflüssigkeit (2) definierenden und in dem Destillierbehälter (10) angeordneten Füllstandsensor (16) zum Detektieren einer Füllhöhe der Schmutzflüssigkeit (2), einer mit dem Destillierbehälter (10) fluidisch verbundenen Einleitpumpe (20) zum Einleiten der Schmutzflüssigkeit (2), einer mit dem Destillierbehälter (10) thermisch verbundenen und an einer Außenseite des Destillierbehälters (10) angeordneten Heizeinrichtung (30) zum Erhitzen der Schmutzflüssigkeit (2), einem mit der Einleitpumpe (20), dem Füllstandsensor (16) und der Heizeinrichtung (30) elektrisch verbundenen Steuergerät (50) und einem in dem Destillierbehälter (10) angeordneten und mit dem Steuergerät (50) elektrisch verbundenen Kondensator (60),
**dadurch gekennzeichnet, dass**
die Heizeinrichtung (30) einen Dampfbehälter (31) für einen Wasserdampf mit einer flachen Heizfläche (32) umfasst, welche mit einem flachen Boden (11) des Destillierbehälters (10) in Anlage ist.

12. Anlage nach Anspruch 11,
**dadurch gekennzeichnet, dass**
eine Kontur der Heizfläche (32) und eine Kontur der Außenfläche des Bodens (11) identisch sind und/oder zwischen der Heizfläche (32) und der Außenfläche des Bodens (11) eine vollflächige thermische Kopplung besteht.

13. Anlage nach einem der Ansprüche 11 oder 12,
**dadurch gekennzeichnet, dass**
die Heizfläche (32) rechteckig und/oder die Außenfläche des Bodens (11) rechteckig ist.

14. Anlage nach einem der Ansprüche 11 bis 13,
**dadurch gekennzeichnet, dass**
die Heizeinrichtung (30) einen gegenüberliegend zu der Heizfläche (32) angeordneten Boden, einen von dem Boden in das Innere des Dampfbehälters (31) vorstehenden eine Sollfüllhöhe des Dampfbehälters (31) definierenden Überlaufstutzen (34), einen von dem Boden in das Innere des Dampfbehälters (31) weiter als der Überlaufstutzen (34) vorstehenden Füllstutzen (33), eine an den Boden angeformte Rinne (35) und einen eine in einer lateralen Stirnfläche der Rinne (35) ausgebildete Öffnung (36) durchgreifenden und die Öffnung (36) verschließenden Rohrheizkörper (37) mit einer Mehrzahl von Heizwendeln umfasst, welche sich im montierten Zustand des Rohrheizkörpers (37) ausgehend von einem Flansch in die Rinne (35) erstrecken.

15. Anlage nach einem der Ansprüche 11 bis 14,
**dadurch gekennzeichnet, dass**
die Heizeinrichtung (30) ein Überdruckventil (43), einen Dampfdrucksensor (44) und einen Wasseranschluss (45) umfasst, welche jeweils mit dem Füllstutzen (33) fluidisch verbunden sind.

16. Anlage nach Anspruch 15,
**dadurch gekennzeichnet, dass**
die Heizeinrichtung (30) ein mit dem Füllstutzen (33) fluidisch verbundenes Rohrkreuz (42) umfasst, an welches das Überdruckventil (43), der Dampfdrucksensor (44) und der Wasseranschluss (45) angeschlossen sind.

17. Anlage nach einem der Ansprüche 15 und 16,
**dadurch gekennzeichnet, dass**
ein den Füllstutzen (33) und das Rohrkreuz (42) verbindendes Füllrohr (40) eine Rohrwindung (41) aufweist.

18. Anlage nach einem der Anspruch 11 bis 17,
**gekennzeichnet durch**
einen mit dem Destillierbehälter (10) trennbar fluidisch verbundenen Zwischenbehälter (70) für die kondensierte Flüssigkeit (5).

19. Anlage nach Anspruch 18,
**gekennzeichnet durch**
eine mit dem Zwischenbehälter (70) fluidisch verbundene und mit dem Steuergerät (50) elektrisch verbundene Vakuumpumpe (80).

20. Anlage nach einem der Ansprüche 18 oder 19,
**gekennzeichnet durch**
einen in einer Umfangswandung des Zwischenbehälters (70) angeordneten und mit dem Steuergerät (50) verbundenen Füllstandsensor (71), einen in der Umfangswandung des Zwischenbehälters (70) angeordneten und mit dem Steuergerät (50) verbundenen Arbeitsdrucksensor (72) und einen in einem Boden des Zwischenbehälters (70) angeordneten Auslassabschluss zum Auslassen der Flüssigkeit (5).

21. Anlage nach Anspruch 20,
**dadurch gekennzeichnet, dass**
das Steuergerät (50) konfiguriert ist, ein mit dem Auslassanschluss fluidisch verbundenes Flüssigkeitsauslassventil (96) zu öffnen, wenn eine von dem Füllstandsensor (71) detektierte Füllhöhe der Flüssigkeit (5) eine vorbestimmte Maximalfüllhöhe erreicht oder überschreitet.

22. Anlage nach einem der Ansprüche 20 und 21,
**dadurch gekennzeichnet, dass**
das Steuergerät (50) konfiguriert ist, ein Flüssigkeitsauslassventil des Zwischenbehälters (70) für eine vorbestimmte Zeitdauer zu öffnen, wenn eine von dem Füllstandsensor (71) des Zwischenbehälters (70) detektierte Füllhöhe der Flüssigkeit (5) eine vorbestimmte Maximalfüllhöhe erreicht oder überschreitet.

23. Anlage nach einem der Ansprüche 20 bis 22,
**gekennzeichnet durch**
einen an dem Zwischenbehälter (70) angeordneten Belüftungsanschluss mit einem mit dem Steuergerät (50) elektrisch verbundenen Belüftungsventil zum Belüften des Zwischenbehälters (70).

24. Anlage nach einem der Ansprüche 11 bis 23,
**dadurch gekennzeichnet, dass**
der Destillierbehälter (10) eine dem Boden (11) gegenüberliegend angeordnete Decke, eine sich ausgehend von einem Rand des Bodens (11) zu einem Rand der Decke erstreckenden und den Boden (11) und die Decke umlaufend verbindenden Umfangswandung, einen in der Umfangswandung ausgebildeten Schmutzflüssigkeitsanschluss (12) zum Einleiten der Schmutzflüssigkeit (2), eine in der Umfangswandung ausgebildete Auffangrinne (14) zum Auffangen der kondensierten Flüssigkeit (5), einen in der Umfangswandung ausgebildeten mit der Auffangrinne (14) fluidisch verbundenen Flüssigkeitsanschluss (15) zum Entnehmen von kondensierter Flüssigkeit (5) aus dem Destillierbehälter (10), einem in der Umfangswandung ausgebildeten Rückstandanschluss (13) zum Ablassen einer Rückstandsflüssigkeit (6) umfasst.

25. Anlage nach einem der Ansprüche 11 bis 24,
**gekennzeichnet durch**
einen bezogen auf den Füllstandsensor (16) gegenüberliegend zu dem Boden angeordneten Temperatursensor (17).

26. Anlage nach einem der Ansprüche 11 bis 25,
**dadurch gekennzeichnet, dass**
das Steuergerät (50) konfiguriert ist, die Einleitpumpe (20) zu stoppen, wenn von dem Füllstandsensor (16) die vorbestimmte Sollfüllhöhe der Schmutzflüssigkeit (2) detektiert wird, und die Einleitpumpe (20) zu starten, wenn von dem Füllstandsensor (16) nicht die vorbestimmte Sollfüllhöhe der Schmutzflüssigkeit (2) detektiert wird.

27. Anlage nach einem der Ansprüche 11 bis 26,
**dadurch gekennzeichnet, dass**
das Steuergerät (50) konfiguriert ist, die Schmutzflüssigkeit (2) während einer Nachdestillationsdauer zu einer Rückstandsflüssigkeit (6) werden zu lassen und dann die Rückstandsflüssigkeit (6) automatisch abzulassen, wenn der Füllstandsensor (16) nach einer mit einem Stoppen der Einleitpumpe (20) beginnenden vorbestimmten Arbeitsdauer weiterhin die vorbestimmte Sollfüllhöhe detektiert.

## Claims

1. A method for distilling a liquid (5) from a soiled liquid (2), comprising the steps:
- automatically arranging in a distillation column (10) of a distillation device (1) a soiled fluid (2) comprising a liquid (5) by feeding the soiled fluid (2) into the distillation column (10) under a closed loop control;
- heating the soiled fluid (2) arranged in the distillation column (10) for vaporizing the liquid (5);
- liquefying a vaporized liquid (5) by condensation;
- accumulating the condensed liquid (5);
- removing a distillation residue from the distillation column (10),
**characterized in that**
the soiled liquid (2) is heated by a steam generated in a heating device (30) of the distillation device (1), wherein a heat is evenly transferred to the soiled liquid (2) from a steam container (31) of the heating device (30) to the soiled liquid (2), the steam container (31) having a flat heating surface (32) in contact with an outer surface of a flat bottom (11) of the steam container (31).

2. The method according to claim 1,
**characterized in that**
removing the distillation residue comprises automatically draining a residue liquid (6) from the distillation column (10).

3. The method according to one of claims 1 or 2,
**characterized in that**
accumulating the condensed liquid (5) comprises removing the condensed liquid (5) from the distillation column (10) and arranging the condensed liquid (5) in an intermediate container (70) different from the distillation column (10) and fluidly separably connected to the distillation column (10).

4. The method according to claim 3,
**characterized by**
removing the accumulated liquid (5) from the intermediate container (70) under a closed loop control.

5. The method according to claim 4,
**characterized in that**
removing under the closed loop control comprises the accumulated liquid (5) being drained from the intermediate container (70) during a predetermined time interval when a level sensor of the intermediate container (70) detects a defined predetermined maximum filling level of the liquid (5) to be exceeded, the level sensor defining the predetermined maximum filling level.

6. The method according to one of claims 1 to 5,
**characterized in that**
a vacuum pump (80) provides a working pressure in the distillation column (10), the working pressure being lower than an air pressure outside the distillation device (1).

7. The method according to claim 6,
**characterized in that**
the vacuum pump (80) provides a working pressure in the intermediate container (70), the working pressure being lower than an air pressure outside the distillation device (1).

8. The method according to claim 7,
**characterized in that**,
before draining the accumulated liquid (5), a pressure in the intermediate container (70) is increased to equal the air pressure outside the intermediate container (70) and, after draining the accumulated liquid (5), the pressure in the intermediate container (70) is reduced to equal the working pressure.

9. The method according to one of claims 1 to 9,
**characterized in that,**
feeding under the closed loop control comprises the soiled liquid (2) being fed by a feeding pump (20) when a level sensor (16) of the distillation column (10) detects a defined target filling level of the soiled liquid (2) to be dropped below, the level sensor defining the target filling level.

10. The method according to one of claims 1 to 10,
**characterized in that**
the vaporized liquid (5) is liquefied by a condenser (60) arranged inside the distillation column (10).

11. A device (1) for distilling a liquid (5) from a soiled liquid (2), comprising a distillation column (10), a level sensor (16) arranged within the distillation column (10) and defining a target filling level of a soiled liquid (2) for detecting a filling level of the soiled liquid (2), a feeding pump (20) fluidly connected to the distillation column (10) for feeding the soiled liquid (2), a heating device (30) thermally connected to the distillation column (10) and arranged outside the distillation column (10) for heating the soiled liquid (2), a control unit (50) electrically connected to the feeding pump (20), the level sensor (16) and the heating device (30), and a condenser (60) arranged within the distillation column (10) and electrically connected to the control unit (50),
**characterized in that**
the heating device (30) comprises a steam container (31) for a steam, the steam container (31) comprising a flat heating surface (32) in contact with a flat bottom (11) of the distillation chamber (10).

12. The device according to claim 11,
**characterized in that**
a contour of the heating surface (32) and a contour of the outer surface of the bottom (11) are identical and/or between the heating surface (32) and the outer surface of the bottom (11) there is a full-surface thermal coupling.

13. The device according to one of claims 11 or 12,
**characterized in that**
the heating surface (32) is rectangular and/or the outer surface of the bottom (11) is rectangular.

14. The device according to one of claims 11 to 13,
**characterized in that**
the heating device (30) has a bottom arranged opposite to the heating surface (32), an overflow nozzle (34) protruding into the interior of the steam container (31) from the bottom and defining a target filling level of the steam container (31), a filling nozzle (33) protruding into the interior of the steam container (31) from the bottom more far than the overflow nozzle (34), a channel (35) shaped to the bottom and a tubular heating element (37) extending through an opening (36) formed in a lateral front surface and sealing the opening (36), the tubular heating element (37) comprising a plurality of heating turns extending from a flange into the channel (35) in a mounted state of the tubular heating element (37).

15. The device according to one of claims 11 to 14,
**characterized in that**
the heating device (30) comprises a relief valve (43), a steam pressure sensor (44) and a water inlet (45) each of which fluidly connected to the feeding nozzle (33).

16. The device according to claim 15,
**characterized in that**
the heating device (30) comprises a cross tube (42) fluidly connected to the feeding nozzle (33), the relief valve (43), the steam pressure sensor (44) and the water inlet (35) being connected to the cross tube (42).

17. The device according to one of claims 15 and 16,
**characterized in that**
a feeding tube (40) connecting the feeding nozzle (33) and the cross tube (42) has a turning portion (41).

18. The device according to one of claims 11 to 17,
**characterized by**
an intermediate container (70) for the condensed liquid (5), the intermediate container (70) fluidly separably connected to the distillation column (10).

19. The device according to claim 18,
**characterized in that**
a vacuum pump (80) fluidly connected to the intermediate container (70) and electrically connected to the control unit (50).

20. The device according to one of claims 18 or 19,
**characterized by**
a level sensor (71) arranged in a circumferential wall of the intermediate container (70) and connected to the control unit (50), a working pressure sensor (72) arranged in the circumferential wall of the intermediate container (70) and connected to the control unit (50) and an outlet port for draining the liquid (5), the outlet port arranged in a bottom of the intermediate container (70).

21. The device according to claim 20,
**characterized in that**
the control unit (50) is configured for opening a liquid outlet valve (96) fluidly connected to the outlet port when a filling level of the liquid (5) detected by the level sensor (71) equals or exceeds a predetermined maximum filling level.

22. The device according to one of claims 20 and 21,
**characterized in that**
the control unit (50) is configured for opening a liquid outlet valve of the intermediate container (70) for a predetermined time interval when a filling level of the liquid (5) detected by the level sensor (71) of the intermediate container (70) equals or exceeds a predetermined maximum filling level.

23. The device according to one of claims 20 to 22,
**characterized by**
a ventilation port arranged on the intermediate container (70), the ventilation port comprising a ventilation valve connected to the control unit (50) for ventilating the intermediate container (70).

24. The device according to one of claims 11 to 23,
**characterized in that**
the distillation column (10) comprises a ceiling arranged opposite to the bottom (11), a circumferential wall extending from an edge of the bottom (11) to an edge of the ceiling and circumferentially connecting the ceiling and the bottom (11), a soiled liquid port (12) formed in the circumferential wall for feeding the soiled liquid (2), an accumulation channel (14) for accumulating of the condensed liquid (5), a liquid port (15) formed in the circumferential wall and fluidly connected to the accumulation channel (14) for removing the condensed liquid (5) from the distillation column (10), and a residue port (13) formed in the circumferential wall for draining a residue liquid (6).

25. The device according to one of claims 11 to 24,
**characterized by**
a temperature sensor (17) arranged opposite to the bottom in relation to the level sensor (16).

26. The device according to one of claims 11 to 25,
**characterized in that**
the control unit (50) is configured for stopping the feeding pump (20) when the predetermined target filling level of the soiled fluid (2) is detected by the level sensor (16), and for starting the feeding pump (20) when the predetermined target filling level is not detected by the level sensor (16).

27. The device according to one of claims 11 to 26,
**characterized in that**
the control unit (50) is configured for letting the soiled liquid (2) become a residue liquid (6) during an after-distillation time interval and then automatically draining the residue liquid (6) when the level sensor (16) keeps on detecting the predetermined target filling level after a predetermined working time interval, the predetermined working time interval starting with a stopping of the feeding pump (20).

## Revendications

1. - Procédé de distillation d'un liquide (5) à partir d'un liquide contaminé (2), comportant les étapes suivantes :
• disposition automatique d'un liquide contaminé (2) comprenant un liquide (5) dans un récipient de distillation (10) d'une installation de distillation (1) par une introduction contrôlée du liquide contaminé (2) dans le récipient de distillation (10) ;
• chauffage du liquide contaminé (2) disposé dans le récipient de distillation (10) afin de faire évaporer le liquide (5) ;
• liquéfaction d'un liquide évaporé (5) dans le récipient de distillation (10) par condensation ;
• collecte du liquide condensé (5) ;
• retrait d'un résidu de distillation à partir du récipient de distillation (10),
**caractérisé par le fait que**
le liquide contaminé (2) est chauffé avec une vapeur d'eau générée dans un dispositif de chauffage (30) de l'installation de distillation (1), une chaleur étant transférée de manière uniforme dans le liquide contaminé (2) à partir d'un récipient de vapeur (31) du dispositif de chauffage (30), lequel présente une surface chauffante (32) plate, laquelle est en contact avec une surface externe d'un fond plat (11) du récipient de distillation (10).

2. - Procédé selon la revendication 1,
**caractérisé par le fait que**
le retrait du résidu de distillation (6) comporte une évacuation automatique d'un liquide résiduel (6) à partir du récipient de distillation (10).

3. - Procédé selon l'une des revendications 1 ou 2,
**caractérisé par le fait que**
la collecte du liquide condensé (5) comporte un retrait du liquide condensé (5) à partir du récipient de distillation (10) et une disposition du liquide condensé (5) dans un récipient intermédiaire (70) de l'installation de distillation (1), différent du récipient de distillation (10) et relié fluidiquement de manière séparable avec le récipient de distillation (10).

4. - Procédé selon la revendication 3,
**caractérisé par**
un retrait contrôlé du liquide collecté (5) à partir du récipient intermédiaire (70).

5. - Procédé selon la revendication 4,
**caractérisé par le fait que**
lors du retrait contrôlé, le liquide collecté (5) est évacué du récipient intermédiaire (70) pendant une période de temps prédéterminée lorsqu'un capteur de niveau de remplissage du récipient intermédiaire (70), définissant une hauteur de remplissage maximale prédéterminée du liquide (5), détecte un dépassement de la hauteur de remplissage maximale prédéterminée définie.

6. - Procédé selon l'une des revendications 1 à 5, **caractérisé par le fait qu'**
une pompe à vide (80) fournit dans le récipient de distillation (10) une pression de travail, laquelle est inférieure à une pression d'air à l'extérieur de l'installation de distillation (1).

7. - Procédé selon la revendication 6,
**caractérisé par le fait que**
la pompe à vide (80) fournit dans le récipient intermédiaire (70) une pression, laquelle est inférieure à une pression d'air à l'extérieur de l'installation de distillation (1).

8. - Procédé selon la revendication 7,
**caractérisé par le fait qu'**
avant la sortie du liquide collecté (5), une pression dans le récipient intermédiaire (70) est augmentée jusqu'à ce qu'elle soit égale à la pression d'air à l'extérieur du récipient intermédiaire (70), et après la sortie du liquide collecté (5), une pression dans le récipient intermédiaire (70) est réduite jusqu'à ce qu'elle soit égale à la pression de travail.

9. - Procédé selon l'une des revendications 1 à 8, **caractérisé par le fait que**
lors de l'introduction contrôlée, le liquide contaminé (2) est introduit par une pompe d'introduction (20) lorsqu'un capteur de niveau de remplissage (16) du récipient de distillation (10), définissant une hauteur de remplissage prescrite du liquide contaminé (2), détecte un sous-dépassement de la hauteur de remplissage prescrite définie.

10. - Procédé selon l'une des revendications 1 à 9,
**caractérisé par le fait que**
le liquide évaporé (5) est liquéfié par un condenseur (60) disposé dans le récipient de distillation (10).

11. - Installation (1) pour distiller un liquide (5) à partir d'un liquide contaminé (2), comportant un récipient de distillation (10), un capteur de niveau de remplissage (16) définissant une hauteur de remplissage prescrite d'un liquide contaminé (2) et disposé dans le récipient de distillation (10) pour détecter une hauteur de remplissage du liquide contaminé (2), une pompe d'introduction (20) reliée fluidiquement avec le récipient de distillation (10) pour introduire le liquide contaminé (2), un dispositif de chauffage (30) relié thermiquement avec le récipient de distillation (10) et disposé sur un côté externe du récipient de distillation (10) pour chauffer le liquide contaminé (2), un dispositif de commande (50) relié électriquement avec la pompe d'introduction (20), le capteur de niveau de remplissage (16) et le dispositif de chauffage (30), et un condenseur (60) disposé dans le récipient de distillation (10) et relié électriquement avec le dispositif de commande (50), **caractérisée par le fait que**
le dispositif de chauffage (30) comporte un récipient de vapeur (31) pour une vapeur d'eau avec une surface de chauffage (32) plate, laquelle est en contact avec un fond plat (11) du récipient de distillation (10).

12. - Installation selon la revendication 11,
**caractérisée par le fait qu'**
un contour de la surface chauffante (32) et un contour de la surface externe du fond (11) sont identiques et/ou il existe un couplage thermique sur toute la surface entre la surface chauffante (32) et la surface externe du fond (11).

13. - Installation selon l'une des revendications 11 ou 12,
**caractérisée par le fait que**
la surface chauffante (32) est rectangulaire et/ou la surface externe du fond (11) est rectangulaire.

14. - Installation selon l'une des revendications 11 à 13,
**caractérisée par le fait que**
le dispositif de chauffage (30) comporte un fond disposé à l'opposé de la surface chauffante (32), une tubulure de trop-plein (34) faisant saillie à partir du fond dans l'intérieur du récipient de vapeur (31) et définissant une hauteur de remplissage prescrite du récipient de vapeur (31), une tubulure de remplissage (33) faisant saillie à partir du fond dans l'intérieur du récipient de vapeur (31) plus que la tubulure de trop-plein (34), une rigole (35) formée sur le fond et un corps chauffant tubulaire (37) passant à travers une ouverture (36) formée dans une face frontale latérale de la rigole (35) et fermant l'ouverture (36), avec une pluralité de serpentins de chauffage, lesquels s'étendent dans la rigole (35) à partir d'une bride, à l'état monté du corps chauffant tubulaire (37).

15. - Installation selon l'une des revendications 11 à 14,
**caractérisé par le fait que**
le dispositif de chauffage (30) comporte une soupape de surpression (43), un capteur de pression de vapeur (44) et un raccordement à l'eau (45), lesquels sont respectivement reliés fluidiquement avec la tubulure de remplissage (33).

16. - Installation selon la revendication 15, **caractérisée par le fait que**
le dispositif de chauffage (30) comporte une croix de tubes (42) reliée fluidiquement avec la tubulure de remplissage (33), à laquelle sont raccordés la soupape de surpression (43), le capteur de pression de vapeur (44) et le raccordement à l'eau (45).

17. - Installation selon l'une des revendications 15 et 16,
**caractérisée par le fait qu'**
un tube de remplissage (40) reliant la tubulure de remplissage (33) et la croix de tubes (42) présente un enroulement de tube (41).

18. - Installation selon l'une des revendications 11 à 17,
**caractérisée par**
un récipient intermédiaire (70) pour le liquide condensé (5), relié fluidiquement de manière séparable avec le récipient de distillation (10).

19. - Installation selon la revendication 18, **caractérisée par**
une pompe à vide (80) reliée fluidiquement avec le récipient intermédiaire (70) et reliée électriquement avec le dispositif de commande (50).

20. - Installation selon l'une des revendications 18 ou 19,
**caractérisée par**
un capteur de niveau de remplissage (71) disposé dans une paroi périphérique du récipient intermédiaire (70) et relié avec le dispositif de commande (50), un capteur de pression de travail (72) disposé dans la paroi périphérique du récipient intermédiaire (70) et relié avec le dispositif de commande (50), et une terminaison de sortie disposée dans un fond du récipient intermédiaire (70) pour la sortie du liquide (5).

21. - Installation selon la revendication 20, **caractérisée par le fait que**
le dispositif de commande (50) est configuré pour ouvrir une soupape de sortie de liquide (96) reliée fluidiquement avec le raccordement de sortie lorsqu'une hauteur de remplissage du liquide (5), détectée par le capteur de niveau de remplissage (71), atteint ou dépasse une hauteur de remplissage maximale prédéterminée.

22. - Installation selon l'une des revendications 20 et 21,
**caractérisée par le fait que**
le dispositif de commande (50) est configuré pour ouvrir une soupape de sortie de liquide du récipient intermédiaire (70) pendant une durée prédéterminée lorsqu'une hauteur de remplissage du liquide (5), détectée par le capteur de niveau de remplissage (71) du récipient intermédiaire (70), atteint ou dépasse une hauteur de remplissage maximale prédéterminée.

23. - Installation selon l'une des revendications 20 à 22,
**caractérisé par**
un raccordement d'aération disposé sur le récipient intermédiaire (70) avec une soupape d'aération reliée électriquement avec le dispositif de commande (50) pour l'aération du récipient intermédiaire (70).

24. - Installation selon l'une des revendications 11 à 23,
**caractérisé par le fait que**
le récipient de distillation (10) comporte un plafond disposé à l'opposé du fond (11), une paroi périphérique s'étendant à partir d'un bord du fond (11) jusqu'à un bord du plafond et reliant le fond (11) et le plafond de manière périphérique, un raccordement de liquide contaminé (12) formé dans la paroi périphérique pour introduire le liquide contaminé (2), une rigole collectrice (14) formée dans la paroi périphérique pour collecter le liquide condensé (5), un raccordement de liquide (15) formé dans la paroi périphérique et relié fluidiquement avec la rigole collectrice (14) pour prélever le liquide condensé (5) à partir du récipient de distillation (10), un raccordement de résidu (13) formé dans la paroi périphérique pour évacuer un liquide résiduel (6).

25. - Installation selon l'une des revendications 11 à 24,
**caractérisé par**
un capteur de température (17) disposé à l'opposé du fond par rapport au capteur de niveau de remplissage (16).

26. - Installation selon l'une des revendications 11 à 25,
**caractérisé par le fait que**
le dispositif de commande (50) est configuré pour arrêter la pompe d'introduction (20) lorsque la hauteur de remplissage prescrite prédéterminée du liquide contaminé (2) est détectée par le capteur de niveau de remplissage (16), et pour démarrer la pompe d'introduction (20) lorsque la hauteur de remplissage prescrite prédéterminée du liquide contaminé (2) n'est pas détectée par le capteur de niveau de remplissage (16).

27. - Installation selon l'une des revendications 11 à 26,
**caractérisée par le fait que**
le dispositif de commande (50) est configuré pour faire en sorte que le liquide contaminé (2) devienne un liquide résiduel (6) pendant une période de post-distillation, puis pour évacuer automatiquement le liquide résiduel (6) lorsque le capteur de niveau de remplissage (16) détecte toujours la hauteur de remplissage prescrite prédéterminée après une durée de travail prédéterminée commençant par un arrêt de la pompe d'introduction (20).
